# EUROPEAN PATENT APPLICATION

(11) **EP 4 666 853 A1**
(43) Date of publication of application: **24.12.2025**
(21) Application number: 25183517.9
(22) Date of filing: 18.06.2025
(51) Int. Cl.: A01K 85/00

(54) **RECOIL LURE**

(30) Priority: 18.06.2024 US 202418746460
(71) Applicant: Pure Fishing, Inc., Spirit Lake, IA 51360 (US)
(72) Inventor: PETERSON, Kyle, Jacob, SPIRIT LAKE, IA 51360 (US)
(74) Representative: Cabinet Beau de Loménie

(57) **Abstract**

The fishing lure (1) provided herein may include a body (5) which may comprise a dynamic portion (15) and a static portion (10). The dynamic portion (15) may be shaped like a serpentine path and may be configured to adjust in a similar manner as an accordion. The dynamic portion (15) may retract or expand based on movement of water surrounding the fishing lure (1). This retracting and expanding may cause movement of the dynamic portion (15) that may mimic the movement of a fishtail. This movement may be useful when fishing, as it may lure fish by moving in a similar manner as prey.

## Description

### Field of Invention

The present invention relates generally to a fishing lure. More specifically, the invention relates to a fishing lure with enhanced movability in water.

### Background of Invention

Fishing lures may be useful to catch certain fish, and different types of fishing lures may be designed for particular fish. In order to catch fish, fishermen use fishing line to drag their fishing lures through the water. The movement of the fishing lures through water can be used to attract fish, as the lures move in a manner similar to prey.

Existing fishing lures, however, are static and do not adjust with the movement of the water. A need exists for enhanced fishing lures which move and adjust based on the movement of the water around them.

### Summary of Invention

The present invention overcomes many of the shortcomings and limitations of the prior art devices discussed above. The invention described herein includes several embodiments of a fishing lure.

The fishing lure may be designed and shaped in any suitable manner, and in one embodiment, the fishing lure may be shaped similarly to prey. The shape and design of the fishing lure may aid in catching fish. The fishing lure as provided herein may include a body which may comprise a dynamic portion and a static portion.

The dynamic portion may be shaped like a serpentine path and may be configured to adjust in a similar manner as an accordion. The dynamic portion may retract or expand based on movement of water surrounding the fishing lure. This retracting and expanding may cause movement of the dynamic portion that may mimic the movement of a fishtail. The dynamic portion may be designed such that it may move even when it moves at slow speeds. This movement may be useful when fishing, as it may lure fish by moving in a similar manner as prey.

### Brief Description of Drawings

Fig. 1 is a side view of a first lure constructed according to the teachings of the present application;
Fig. 2 is a topside (or underside) view of the first lure constructed according to the teachings of the present application;
Fig. 3 is a topside (or underside) view of a second lure constructed according to the teachings of the present application;
Fig. 4 is a side view of the second lure constructed according to the teachings of the present application;
Fig. 5 is a side view of a third lure constructed according to the teachings of the present application;
Fig. 6 is a topside (or underside) view of the third lure constructed according to the teachings of the present application;
Fig. 7 is a side view of a fourth lure constructed according to the teachings of the present application;
Fig. 8 is a topside (or underside) view of the fourth lure constructed according to the teachings of the present application;
Fig. 9 is a side view of a fifth lure constructed according to the teachings of the present application;
Fig. 10 is a topside (or underside) view of the fifth lure constructed according to the teachings of the present application;
Fig. 11 is a side view of a sixth lure constructed according to the teachings of the present application; and
Fig. 12 is a topside (or underside) view of the sixth lure constructed according to the teachings of the present application.

While the disclosure is susceptible to various modifications and alternative forms, a specific embodiment thereof is shown by way of example in the drawings and will herein be described in detail. It should be understood, however, that the drawings and detailed description presented herein are not intended to limit the disclosure to the particular embodiment disclosed, but to the contrary, the intention is to cover all modifications, equivalents, and alternatives falling within the spirit and scope of the present disclosure as defined by the appended claims.

### Detailed Description

The invention will now be described with reference to the drawing figures, in which like reference numerals refer to like parts throughout. For purposes of clarity in illustrating the characteristics of the present invention, proportional relationships of the elements have not necessarily been maintained in the drawing figures.

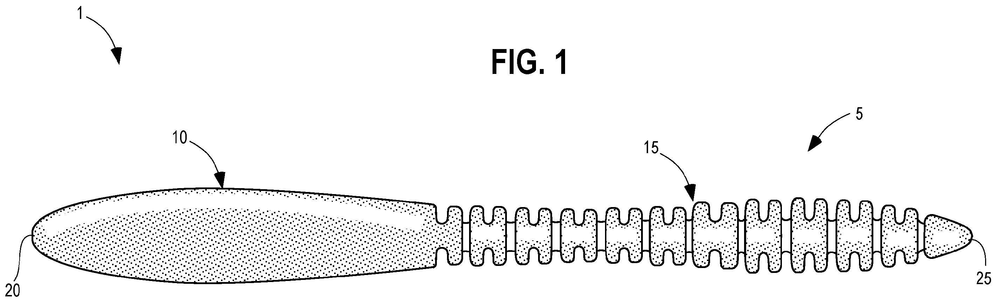

Turning first to Fig. 1, a fishing lure 1 may be shaped in any suitable manner. In various embodiments, the fishing lure 1 is shaped like a fish, such that it may be attractive as "prey." The fishing lure 1 may include a body 5. The body 5 may include a static portion 10 and a dynamic portion 15. The static portion 10 may or may not be used in the fishing lure 1. The structure of the static portion 10 may remain substantially the same despite how the fishing lure 1 moves in water. According to various embodiments, the static portion 10 may be positioned as a first end 20 of the body 5, and in one embodiment, the static portion 10 may be attached to fishing line such that, when attached and connected to a fishing pole and being reeled in, the static portion 10 guides the movement of the fishing lure 1. The dynamic portion 15 may be positioned on the body 5 in any suitable manner. According to various embodiments, the dynamic portion 15 may be positioned on a second end 25 of the body 5, and in one embodiment, the dynamic portion 15 may be guided along in water by the static portion 10 attached to the fishing line. The dynamic portion 15 may be positioned as a "tail" on the fishing lure 1.

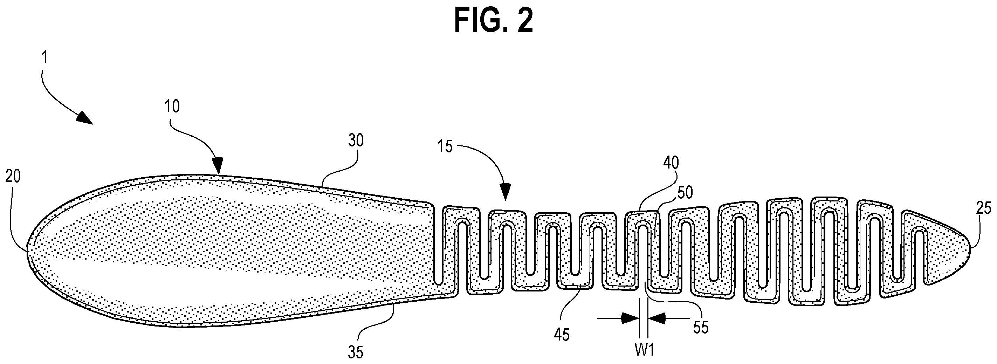

As illustrated in Fig. 2, the fishing lure 1 may have varying widths between the first end 20 and the second end 25; the fishing lure 1 may have varying heights between a right side 30 and a left side 35. Each of the static portion 10 and the dynamic portion 15 may be a certain width and height at its end; each of the static portion 10 and the dynamic portion 15 may be shaped such that they widen or lengthen and/or narrow or taper as they extend between the first end 20 and the second end 25 and between the right side 30 and left side 35.

According to various embodiments, the dynamic portion 15 may be shaped like a serpentine path. The dynamic portion 15 may include several right portions 40 and left portions 45 which may be connected to each other via attachment members 50. The right portions 40, left portions 45, and attachment members 50 may be integrally formed with one another or may be attached in any suitable manner known in the art. The right portions 40, left portions 45, and attachment members 50 may be any suitable size and shape and may have variable widths and heights.

The right portions 40 and left portions 45 may be separated in distance from one another by gaps 55. The dynamic portion 15 may adjust in an accordion manner, such that it may expand or retract. Such expansion and retraction may cause the gaps 55 to have varying widths. As one example and as illustrated in Fig. 2, when at rest, the gaps 55 may have a width W1. When in an expanded position, the dynamic portion 15 may have an increased length as compared to the dynamic portion 15 in a retracted position, as the gaps 55 have a greater width. When the fishing lure 1 is submerged in water, the dynamic portion 15 may expand and/or retract depending on the movement of water around it. The dynamic portion 15 may allow the fishing lure 1 to have a full body profile while maintaining natural movement via its expanding and retracting actions. The dynamic portion 15 may cause movement (expanding or retracting) even when the fishing lure 1 is moving at slow speeds through water. The dynamic portion 15 may be configured to move like a fish tail, and the retracting and expanding of the dynamic portion 15 may be similar to wiggling of a fish tail.

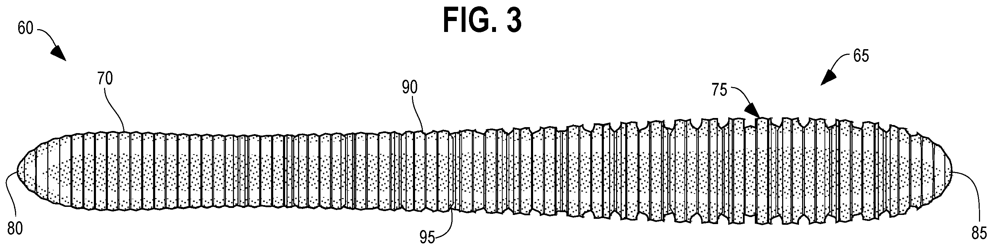

Figs. 3-8 illustrate several embodiments of a fishing lure, which may include similar components of the fishing lure 1 as described with reference to Figs. 1 and 2. The size, shape, material, and texture of the fishing lures as described herein may be designed in any suitable manner, and Figs. 3-8 illustrate several embodiments and designs.

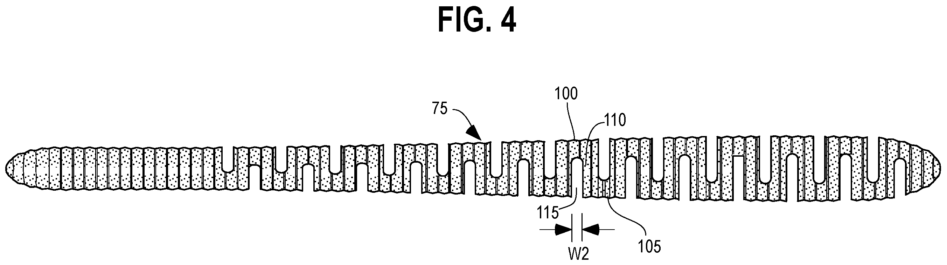

Turning to Figs. 3 and 4, a fishing lure 60 may include ribbing on a body 65. The body 65 may include a static portion 70 and dynamic portion 75, which may be similar to the static portion 10 and/or dynamic portion 15 of Figs. 1 and 2, respectively. The dynamic portion 75 may adjust in a manner similar to the dynamic portion 15 of Figs. 1 and 2. The fishing lure 60 may have varying widths between a first end 80 and a second end 85; the fishing lure 60 may have varying heights between a topside 90 and an underside 95. Each of the static portion 70 and the dynamic portion 75 may be a certain width and height at its end; each of the static portion 70 and the dynamic portion 75 may be shaped such that they widen or lengthen and/or narrow or taper as they extend between the first end 80 and the second end 85 and between the topside 90 and underside 95.

As illustrated in Fig. 4, the dynamic portion 75 may include several upper portions 100 and lower portions 105 which may be connected to each other via attachment members 110. The upper portions 100, lower portions 105, and attachment members 110 may be integrally formed with one another or may be attached in any suitable manner known in the art. The upper portions 100, lower portions 105, and attachment members 110 may be any suitable size and shape and may have variable widths and heights.

The upper portions 100 and lower portions 105 may be separated in distance from one another by gaps 115. The dynamic portion 75 may adjust in an accordion manner, such that it may expand or retract. Such expansion and retraction may cause the gaps 115 to have varying widths. As one example and as illustrated in Fig. 4, when at rest, the gaps 115 may have a width W2. The upper portions 100, lower portions 105, attachment members 110, and gaps 115 and the movement of the same may be similar to the upper portions 40, left portions 45, attachment members 50, and/or gaps 55 of Figs. 1 and 2, respectively.

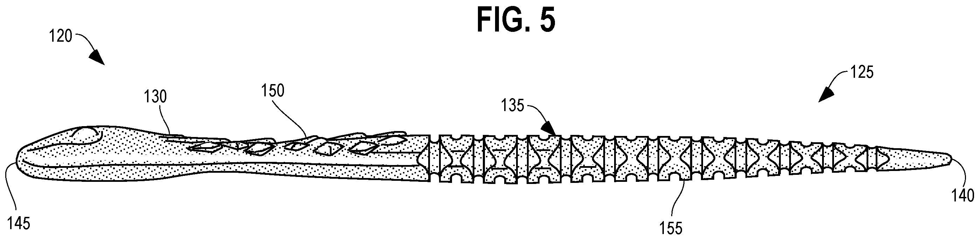

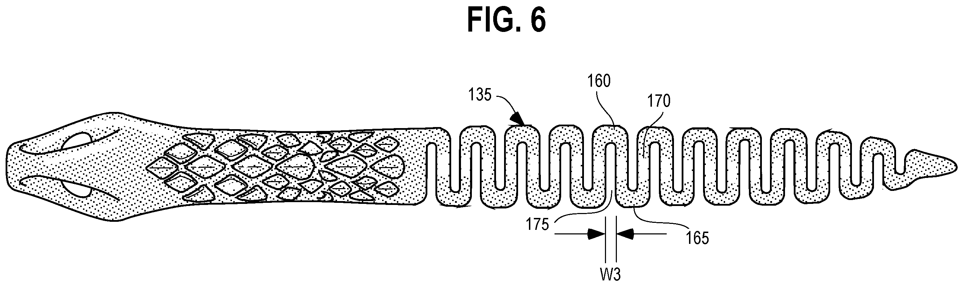

Turning now to Figs. 5 and 6, a fishing lure 120 may include a body 125, which may include a static portion 130 and dynamic portion 135, which may be similar to the static portion 10, 70 and/or dynamic portion 15, 75 of Figs. 1 and 2 and 3 and 4, respectively. The dynamic portion 135 may adjust in a manner similar to the dynamic portion 15, 75 of Figs. 1 and 2 and 3 and 4, respectively. The static portion 130 may include a design, and as illustrated, the static portion 130 may be designed and shaped like a snake head. The dynamic portion 135 may be shaped like a tail at its end 140, which may be designed similar to a snake tail. The fishing lure 125 may have varying widths between a first end 145 and a second end 140 (which may correlated to the end 140 of the dynamic portion 135); the fishing lure 120 may have varying heights between a right side 150 and a left side 155. Each of the static portion 130 and the dynamic portion 135 may be a certain width and height at its end; each of the static portion 130 and the dynamic portion 135 may be shaped such that they widen or lengthen and/or narrow or taper as they extend between the first end 145 and the second end 140 and between the right side 150 and left side 155.

As illustrated in Fig. 6, the dynamic portion 135 may include several right portions 160 and left portions 165 which may be connected to each other via attachment members 170. The right portions 160, left portions 165, and attachment members 170 may be integrally formed with one another or may be attached in any suitable manner known in the art. The right portions 160, left portions 165, and attachment members 170 may be any suitable size and shape and may have variable widths and heights.

The right portions 160 and left portions 165 may be separated in distance from one another by gaps 175. The dynamic portion 135 may adjust in an accordion manner, such that it may expand or retract. Such expansion and retraction may cause the gaps 175 to have varying widths. As one example and as illustrated in Fig. 6, when at rest, the gaps 175 may have a width W3. The right portions 160, left portions 165, attachment members 170, and gaps 175 and the movement of the same may be similar to the right portions 40 or upper portions 100, left portions 45 or lower portions 105, attachment members 50, 110, and/or gaps 55, 115 of Figs. 1 and 2 and 3 and 4, respectively.

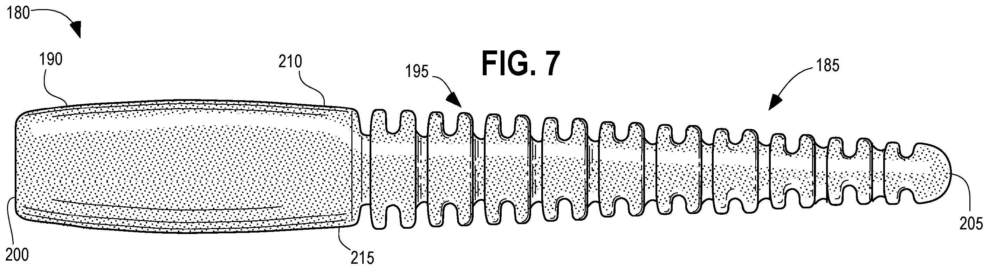

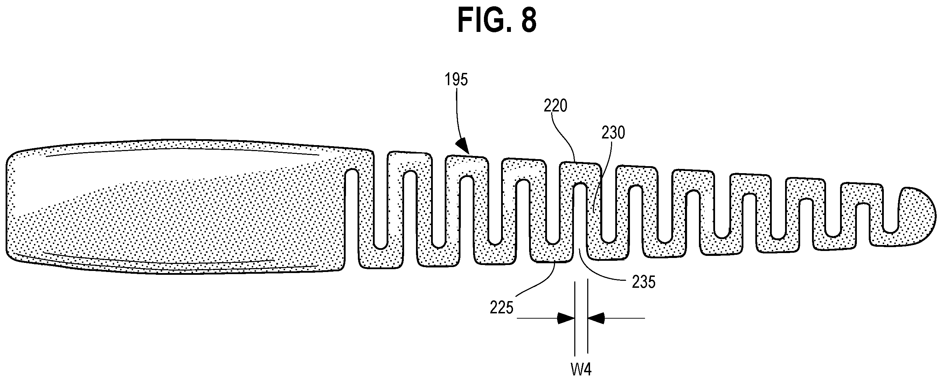

Turning now to Figs. 7 and 8, a fishing lure 180 may include a body 185, which may include a static portion 190 and dynamic portion 195, which may be similar to the static portion 10, 70, 130 and/or dynamic portion 15, 75, 135 of Figs. 1 and 2, 3 and 4, and 5 and 6, respectively. The dynamic portion 195 may adjust in a manner similar to the dynamic portion 15, 75, 135 of Figs. 1 and 2, 3 and 4, and 5 and 6, respectively. The fishing lure 180 may have varying widths between a first end 200 and a second end 205; the fishing lure 180 may have varying heights between a right side 210 and a left side 215. Each of the static portion 190 and the dynamic portion 195 may be a certain width and height at its end; each of the static portion 190 and the dynamic portion 195 may be shaped such that they widen or lengthen and/or narrow or taper as they extend between the first end 200 and the second end 205 and between the right side 210 and left side 215.

As illustrated in Fig. 8, the dynamic portion 195 may include several right portions 220 and left portions 225 which may be connected to each other via attachment members 230. The right portions 220, left portions 225, and attachment members 230 may be integrally formed with one another or may be attached in any suitable manner known in the art. The right portions 220, left portions 225, and attachment members 230 may be any suitable size and shape and may have variable widths and heights.

The right portions 220 and left portions 225 may be separated in distance from one another by gaps 235. The dynamic portion 195 may adjust in an accordion manner, such that it may expand or retract. Such expansion and retraction may cause the gaps 235 to have varying widths. As one example and as illustrated in Fig. 8, when at rest, the gaps 235 may have a width W4. The right portions 220, left portions 225, attachment members 230, and gaps 235 and the movement of the same may be similar to the right portions 40, 160 or upper portions 100, left portions 45, 165 or lower portions 105, attachment members 50, 110, 170, and/or gaps 55, 115, 175 of Figs. 1 and 2, 3 and 4, and 5 and 6, respectively.

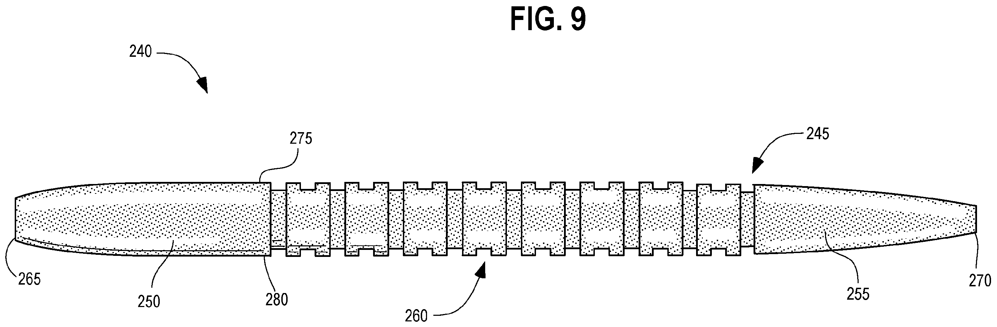

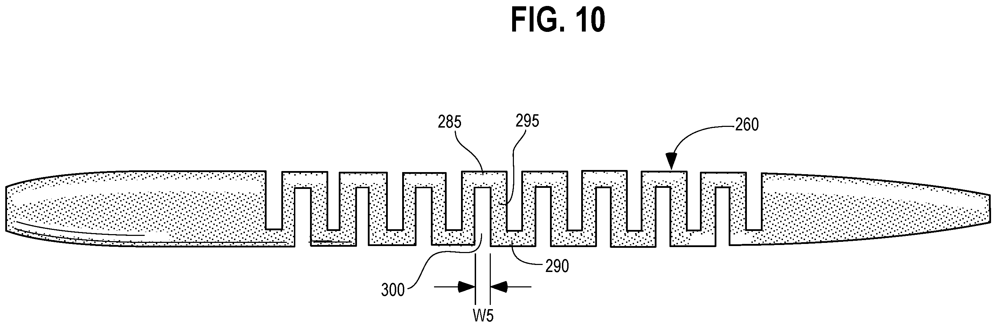

Turning to Figs. 9 and 10, a fishing lure 240 may include a body 245, which may include a first static portion 250 and second static portion 255, with a dynamic portion 260 therebetween. The static portions 250, 255 may be similar to the static portion 10, 70, 130, or 190 of Figs. 1 and 2, 3 and 4, 5 and 6, and 7 and 8, respectively; the dynamic portion 260 may be similar to dynamic portion 15, 75, 135, or 195 of Figs. 1 and 2, 3 and 4, 5 and 6, and 7 and 8, respectively. The dynamic portion 260 may adjust in a manner similar to the dynamic portion 15, 75, 135, or 195 of Figs. 1 and 2, 3 and 4, 5 and 6, and 7 and 8, respectively. The fishing lure 240 may have varying widths between a first end 265 and a second end 270; the fishing lure 240 may have varying heights between a right side 275 and a left side 280. Each of the static portions 250, 255 and the dynamic portion 260 may be a certain width and height at one of its ends; each of the static portions 250, 255 and the dynamic portion 260 may be shaped such that they widen or lengthen and/or narrow or taper as they extend between the first end 265 and the second end 270 and between the right side 275 and left side 280.

As illustrated in Fig. 10, the dynamic portion 260 may include several right portions 285 and left portions 290 which may be connected to each other via attachment members 295. The right portions 285, left portions 290, and attachment members 295 may be integrally formed with one another or may be attached in any suitable manner known in the art. The right portions 285, left portions 290, and attachment members 295 may be any suitable size and shape and may have variable widths and heights.

The right portions 285 and left portions 290 may be separated in distance from one another by gaps 300. The dynamic portion 260 may adjust in an accordion manner, such that it may expand or retract. Such expansion and retraction may cause the gaps 300 to have varying widths. As one example and as illustrated in Fig. 10, when at rest, the gaps 300 may have a width W5. The right portions 285, left portions 290, and attachment members 295, and gaps 300 and the movement of the same may be similar to the right portions 40, 160, 220 or upper portions 100, left portions 45, 165, 225 or lower portions 105, attachment members 50, 110, 170, 230, and/or gaps 55, 115, 175, 235 of Figs. 1 and 2, 3 and 4, 5 and 6, and 7 and 8, respectively.

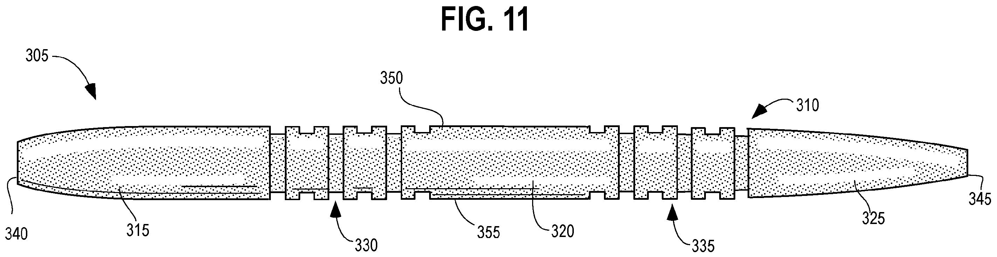

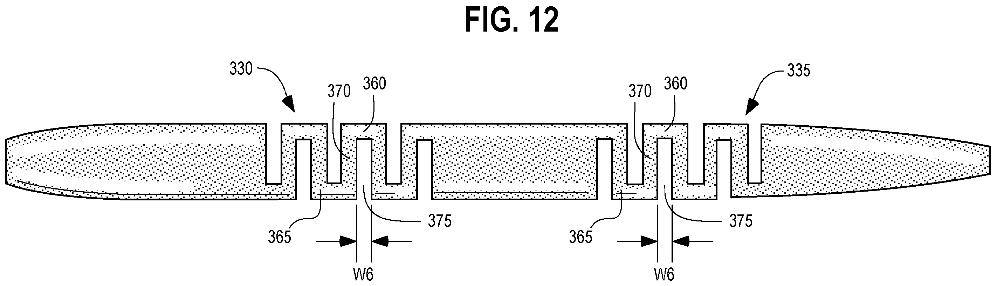

Turning lastly to Figs. 11 and 12, a fishing lure 305 may include a body 310, which may include a first static portion 315, second static portion 320, and third static portion 325. The fishing lure 305 may include a first dynamic portion 330 between the first and second static portions 315, 320 and a second dynamic portion 335 between the second and third static portions 320, 325. The static portions 315, 320, 325 may be similar to the static portion 10, 70, 130, 190, 250, 255 of Figs. 1 and 2, 3 and 4, 5 and 6, 7 and 8, and 9 and 10, respectively; the dynamic portions 330, 335 may be similar to dynamic portion 15, 75, 135, 195, or 260 of Figs. 1 and 2, 3 and 4, 5 and 6, 7 and 8, and 9 and 10, respectively. The dynamic portions 330, 335 may adjust in a manner similar to the dynamic portion 15, 75, 135, 195, or 260 of Figs. 1 and 2, 3 and 4, 5 and 6, 7 and 8, and 9 and 10, respectively. The fishing lure 305 may have varying widths between a first end 340 and a second end 345; the fishing lure 305 may have varying heights between a right side 350 and a left side 355. Each of the static portions 315, 320, 325 and the dynamic portion 330, 335 may be a certain width and height at one of its ends; each of the static portions 315, 320, 325 and the dynamic portion 330, 335 may be shaped such that they widen or lengthen and/or narrow or taper as they extend between the first end 340 and the second end 345 and between the right side 350 and left side 355.

As illustrated in Fig. 12, the dynamic portions 330, 335 may each include several right portions 360 and left portions 365 which may be connected to each other via attachment members 370. The right portions 360, left portions 365, and attachment members 370 may be integrally formed with one another or may be attached in any suitable manner known in the art. The right portions 360, left portions 365, and attachment members 370 may be any suitable size and shape and may have variable widths and heights.

The right portions 360 and left portions 365 may be separated in distance from one another by gaps 375. The dynamic portions 330, 335 may adjust in an accordion manner, such that it may expand or retract. Such expansion and retraction may cause the gaps 375 to have varying widths. As one example and as illustrated in Fig. 12, when at rest, the gaps 375 may have a width W6. According to one embodiment, the width of the gaps 375 of the dynamic portion 330 may be different than the widths of the gaps 375 of the dynamic portion 335. The right portions 360, left portions 365, attachment members 370, and gaps 375 and the movement of the same may be similar to the right portions 40, 160, 220, 285 or upper portions 100, left portions 45, 165, 225, 290 or lower portions 105, attachment members 50, 110, 170, 230, 295, and/or gaps 55, 115, 175, 235, 300 of Figs. 1 and 2, 3 and 4, 5 and 6, 7 and 8, and 9 and 10, respectively.

According to various embodiments, a fishing lure (which may be similar to any one of fishing lure 1, 60, 125, 180, 240, 305, or other fishing lure, or any combination thereof) may include a static portion at each end of the fishing lure. A dynamic portion may be positioned between the static portion. In such an embodiment, the static portions may remain static (as discussed with reference to static portions 10, 70, 130, 190, 250, 255, 315, 320, 325) while the dynamic portion, which may be in a "center" portion between the static portions, may be dynamic and adjust with the movement of water (as discussed with reference to dynamic portions 15, 75, 135, 195, 260, 330, 335).

As is evident from the foregoing description, certain aspects of the present invention are not limited by the particular details of the examples illustrated herein, and it is therefore contemplated that other modifications, applications, variations, or equivalents thereof, will occur to those skilled in the art. Many such changes, modifications, variations, and other uses and applications of the present constructions will, however, become apparent to those skilled in the art after considering the specification and the accompanying drawings. In addition, unless mention was made above to the contrary, it should be noted that all of the accompanying drawings are not to scale. All such changes, modifications, variations, and other uses and applications which do not depart from the spirit and scope of the present inventions are deemed to be covered by the inventions which are limited only by the claims which follow.

## Claims

1. A fishing lure (1, 60, 120, 180, 240, 305) comprising:
a body (5, 65, 125, 185, 245, 310) comprising a dynamic portion (15, 75, 135, 195, 260, 330, 335);
wherein the dynamic portion (15, 75, 135, 195, 260, 330, 335) is configured to move between at least two of a resting position, a retracted position, and an expanded position based upon movement of water surrounding the fishing lure.

2. The fishing lure (1) according to claim 1, wherein the dynamic portion (15) is shaped as a serpentine path.

3. The fishing lure (1, 60, 120, 180, 240, 305) according to claim 1 or 2, wherein the body (5, 65, 125, 185, 245, 310) further comprises a static portion (10, 70, 130, 190, 250, 255, 315, 320, 325).

4. The fishing lure (1, 60, 120, 180, 240, 305) according to claim 3, wherein a shape and a size of the static portion (10, 70, 130, 190, 250, 255, 315, 320, 325) remains substantially the same as the fishing lure (1, 60, 120, 180, 240, 305) moves through water.

5. The fishing lure (1, 120, 180, 240, 305) according to any of claim 1 to 4, wherein the dynamic portion (15, 135, 195, 260, 330, 335) comprises a plurality of right portions (40, 160, 220, 285, 360) and a plurality of left portions (45, 165, 225, 290, 365) connected via a plurality of attachment members (50, 170, 230, 295, 370).

6. The fishing lure (1, 120, 180, 240, 305) according to claim 5, wherein each of the plurality of attachment members (50, 170, 230, 295, 370) have varying heights.

7. The fishing lure (1, 120, 180, 240, 305) according to claims 5 or 6, wherein the plurality of right portions (40, 160, 220, 285, 360) and the plurality of left portions (45, 165, 225, 290, 365) are separated via a plurality of gaps (55, 175, 235, 300, 375).

8. The fishing lure (1, 120, 180, 240, 305) according to claims 7, wherein, in a first position, the plurality of gaps (55, 175, 235, 300, 375) have a first width, and wherein, in a second position, the plurality of gaps (55, 175, 235, 300, 375) have a second width.

9. The fishing lure (1, 120, 180, 240, 305) according to claim 8, wherein the first width is greater than the second width, and wherein the first position corresponds to the expanded position and the second position corresponds to the retracted position.

10. The fishing lure (1, 60, 120, 180, 240, 305) according to any of claims 1 to 9, wherein a first end (20, 80, 145, 200, 265, 340) of the body (5) is configured to be attached to a fishing line.

11. A fishing lure (1) comprising:
a body (5) comprising a dynamic portion (15); and
wherein the dynamic portion (15) is shaped as a serpentine path; and
wherein the dynamic portion (15) is configured to retract or expand based on movement of water surrounding the fishing lure.

12. The fishing lure (1) according to claim 11, wherein the body further comprises a static portion (10).

13. The fishing lure (1) according to claim 11 or 12, wherein the dynamic portion (15) comprises a plurality of right portions (40) and a plurality of left portions (45) connected via a plurality of attachment members (50).

14. The fishing lure (1) of claim 13, wherein:
the plurality of right portions (40) and the plurality of left portions (45) are separated via a plurality of gaps (55);
in a first position, the plurality of gaps (55) have a first width; and
in a second position, the plurality of gaps (55) have a second width.
